# EUROPEAN PATENT APPLICATION

(11) **EP 1 894 482 A2**
(43) Date of publication of application: **05.03.2008**
(21) Application number: 07253370.6
(22) Date of filing: 28.08.2007
(51) Int. Cl.: A41D 31/00, A41D 13/002, D04B 1/00

(54) **Temperature and moisture responsive smart textile**

(30) Priority: 29.08.2006 US 840814 P
(71) Applicant: MMI-IPCO, LLC, Lawrence, MA 01842 (US)
(72) Inventor: Rock, Moshe, Brookline, MA 02446 (US)
(74) Representative: Murray, Elisabeth Anne

(57) **Abstract**

A textile fabric (10) includes a smooth surface (12) with one or more regions having a bound coating of hydrogel (14) exhibiting expansion or contraction in response to change in relative humidity or exposure to liquid sweat or a combination thereof, adjusting insulation performance, air movement, and/or liquid management of the textile fabric 10) in response to ambient conditions.

## Description

### TECHNICAL FIELD

This invention relates to textile fabrics, and more particularly to textile fabrics responsive to change in moisture or temperature.

### BACKGROUND

Standard textile fabrics have properties set during fabric construction that are maintained despite changes in ambient conditions and/or physical activity. These standard products are quite effective, especially when layered with other textile fabrics for synergistic effect and enhancement of comfort.

### SUMMARY

According to one aspect, a textile fabric includes a smooth surface with one or more regions having a bound coating (e.g., chemically bonded or physically bound) of hydrogel exhibiting expansion or contraction in response to change in relative humidity or exposure to liquid sweat or a combination thereof, adjusting insulation performance, air movement, and/or liquid management of the textile fabric in response to ambient conditions.

Preferred implementations may include one or more of the following additional features. The coating of hydrogel can include a polymeric hydrogel. The polymeric hydrogel can be selected from the group consisting of: poly(vinyl methyl ether), and poly(N-isopropylacrylamide). The hydrogel may include a polyurethane polymer, e.g., aliphatic thermoplastic polyurethane, such as KRYSTALGRAN^{®} manufactured by Huntsman International LLC, of Auburn Hills, Michigan and described in Material Safety Data Sheet 8044 of Huntsman, the entire disclosure of which is incorporated herein by reference, and which defines the ingredients as: thermoplastic polyurethane (99%); and/or aromatic thermoplastic polyurethane, such as IROGRAN® manufactured by Huntsman International LLC., of Auburn Hills, Michigan and described in Material Safety Data Sheet 00018182 of Huntsman, the entire disclosure of which is incorporated herein by reference, and which defines the ingredients as: thermoplastic polyurethane (70-100%) and proprietary flame retardants (10-30%). The polyurethane polymer may be a hydrophilic polyurethane. The polyurethane polymer may be a cross-linked or a non-cross-linked polyurethane. The textile fabric may be formed from natural yarns and/or fibers (e.g., cotton, wool, and/or silk), synthetic yarns and/or fibers (e.g., nylon, polyester, polypropylene, and/or acrylic), or a combination of natural and synthetic yarns and/or fibers. The textile fabric may be formed from yarns including a blend of natural and synthetic fibers. The textile fabric may have a plated construction with a plurality of inter-looped yarns including yarns formed from natural fibers and yarns formed from synthetic fibers. The hydrogel may be bound to the smooth surface of the textile fabric with a binder, or bound directly to the smooth surface of the textile fabric (i.e., without the need for a separate and/or additional binder). The hydrogel and/or the binder may be an abrasion resistant material (e.g., durable to repeat washing cycles, as well as physical wet and dry abrasion). The coating of hydrogel may include a plurality of gel particles disposed in a binder. The binder may be a polymer matrix. The binder may be a foam matrix. The binder may include a foamed adhesive configured to bind the hydrogel to the smooth surface of the textile fabric. The binder can be hydrophilic or rendered hydrophilic to promote wicking of moisture towards the hydrogel. The binder may include polyurethane, silicone, and/or acrylic. The gel material has a particle size in the range of between about 1 Tm and about 5,000 Tm in a collapsed state, preferably between about 100 to about 250 Tm. The gel particles account for between about 5% and about 80% of the total dry weight of the hydrogel. The hydrogel has a volume phase transition critical temperature of between about 0°C and about 50°C, e.g., between about 10°C and about 50°C, between about 0°C and about 40°C, between about 30°C and about 40°C, etc. The hydrogel comprises a fast response gel. The expansion and/or contraction of the hydrogel is substantially reversible. The textile fabric has a knitted construction selected from the group consisting of single jersey, plated jersey, double knit, three-end fleece, and terry loop. The textile fabric has one or more properties selected from the group consisting of: good water management, good stretch recovery, and kindness to a wearer's skin. The textile fabric is formed by a knitting process selected from the group consisting of: circular knit, and warp knit. The textile fabric is formed by the process of circular knitting and has a knitted construction selected from the group consisting of: terry loop knit in regular plating, and terry loop knit in reverse plating. The terry loop may be raised by napping. The textile fabric has a woven construction. The textile fabric includes yarn with a plurality of synthetic fibers that are hydrophilic or rendered hydrophilic. The bound coating of hydrogel may be a non-continuous coating including a plurality of discrete coating segments. The coating segments may take the form of discrete dots. The coating segments may includes discrete coating segments of contrasting size. The coating segments may be arranged in clusters of contrasting density. The clusters may be arranged in patterns of contrasting density. The bound coating of hydrogel is a non-continuous coating disposed in a pattern selected from a grid pattern, a pattern comprising one or more bands, and combinations thereof. In some cases, the textile fabric is in the form of an article of wearing apparel and the one or more regions having the bound coating of hydrogel correspond to regions of wearing apparel typically exposed to relatively high levels of moisture. The ambient conditions can include physical stimuli. The one or more regions of hydrogel are configured to adjust breathability and air movement of the textile fabric in response to ambient conditions. The textile fabric may include flame retardant yarns and/or fibers. The flame retardant yarns and/or fibers include synthetic fibers, natural fibers, or combinations thereof.

According to another aspect, a method of forming a temperature and moisture responsive textile fabric element for use in an engineered thermal fabric garment includes combining yarns and/or fibers to form a continuous web; finishing the continuous web to form at least one smooth surface; and depositing a coating of hydrogel on the smooth surface of the continuous web, the hydrogel exhibiting expansion or contraction in response to change in relative humidity or exposure to liquid sweat or a combination thereof, adjusting insulation performance, air movement, and/or liquid management of the textile fabric in response to ambient conditions.

Preferred implementations may include one or more of the following additional features. The step of combining yarns and/or fibers in a continuous web includes combining yarns and/or fibers by circular knitting. The step of combining yarns and/or fibers in a continuous web by tubular circular knitting includes combining yarns and/or fibers with reverse plating. The step of combining yarns and/or fibers in a continuous web by circular knitting includes combining yarns and/or fibers with regular plating. The step of combining yarns and/or fibers in a continuous web includes combining yarns and/or fibers by warp knitting. The step of combining yarns and/or fibers in a continuous web includes combining yarns and/or fibers to form a woven fabric element. The step of combining yarns and/or fibers in a continuous web includes the further step of incorporating spandex fibers in the stitch yarn. The step of depositing the coating of hydrogel includes depositing the coating of hydrogel in one or more discrete regions on the smooth surface of the textile fabric. The one or more discrete regions correspond to regions of the smooth surface typically exposed to relatively high levels of moisture (e.g., liquid sweat) during use. The step of depositing the coating of hydrogel includes depositing a non-continuous coating of hydrogel including a plurality of discrete coating segments. The discrete coating segments may be in the form of dots. The step of depositing the coating of hydrogel comprises depositing the hydrogel in a non-continuous pattern (e.g., a grid pattern, a pattern comprising one or more bands, or combinations thereof). In some cases, the hydrogel includes a polymer gel having a single polymer network and/or a polymer gel having an interpenetrating polymer network. The interpenetrating polymer network may include poly(N-isopropylacrylamide). In some cases, the hydrogel includes a copolymer, which, for example, may include poly(N-isopropylacrylamide). In some embodiments, the step of depositing the coating of hydrogel comprises depositing the hydrogel by a process selected from the group consisting of: coating, lamination, and printing (e.g., hot melt printing, gravure roll printing, hot melt gravure roll (i.e., hot melt by gravure roll application or screen printing). The step of depositing the coating of hydrogel comprises binding the hydrogel to the smooth surface of the textile fabric with a binder. The step of depositing the coating of hydrogel comprises binding the hydrogel directly to the fibers of the textile fabric (i.e., with the need for a separate and/or additional binder). The binder may be hydrophilic or rendered hydrophilic to promote wicking of moisture towards the hydrogel.

In yet another aspect, a temperature and moisture responsive textile fabric garment includes a thermal fabric having a smooth outer surface, and a plurality of discrete regions of hydrogel. The plurality of discrete regions of hydrogel are disposed in a pattern corresponding to one or more predetermined regions of a user's body (e.g., regions of the user's body typically exposed to relatively high levels of moisture, e.g., liquid sweat) and bound to the smooth outer surface of the thermal fabric. The hydrogel exhibits expansion or contraction in response to change in relative humidity or exposure to liquid sweat or a combination thereof, adjusting insulation performance, air movement, and/or liquid management of the textile fabric in response to ambient conditions.

Preferred implementations may include one or more of the following additional features. The hydrogel has a volume phase transitional critical temperature of between about 0°C and about 40°C. The hydrogel absorbs moisture at temperatures below the volume phase transitional critical temperature, causing the material to locally expand, thereby changing a three dimensional configuration of the thermal fabric. The hydrogel polymer or material (e.g., particles) is bound to the textile fabric and any contraction or expansion of the hydrogel effects the three dimensional geometry of the textile fabric. The hydrogel expels moisture at temperatures above the volume phase transitional critical temperature, causing the material to locally contract, thereby changing a three dimensional configuration of the thermal fabric. The hydrogel includes a polymer gel having a single polymer network and/or a polymer gel having an interpenetrating polymer network (IPN). The interpenetrating polymer network may include poly(N-isopropylacrylamide). The hydrogel may include a hydrophilic polyurethane. The hydrophilic polyurethane may be a cross-linked polyurethane or a non-cross-linked polyurethane. In some cases, the hydrogel includes a copolymer. The copolymer may include poly(N-isopropylacrylamide). The smooth outer surface of the thermal fabric includes one or more regions of exposed thermal fabric, disposed between the regions of hydrogel, to permit wicking of moisture from an inner surface of the thermal fabric to the smooth outer surface. The thermal fabric is hydrophilic. In some cases, the thermal fabric includes synthetic fibers that are hydrophilic or treated chemically to render the fibers hydrophilic, to promote wicking of moisture through the thermal fabric. The hydrogel includes a polymer gel selected from the group consisting of: poly(vinyl methyl ether), and poly(N-isopropylacrylamide). The hydrogel may be an abrasion resistant material. The thermal fabric includes spandex for enhanced fit, comfort, and shape recovery (e.g, to aid in the reversibility of three dimensional changes in configuration). The spandex is incorporated in the stitch (e.g., in the form of bare spandex, air entangled, core-spun, and/or a wrap yarn, etc.). The thermal fabric may include flame retardant yarns and/or fibers. The flame retardant yarns and/or fibers include synthetic fibers, natural fibers, or combinations thereof. The hydrogel includes a polymer gel having a homogenous structure. The hydrogel may include a polymer gel incorporated in a binder. The hydrogel may be bound to the smooth surface of the thermal fabric with a binder. The binder may be hydrophilic or rendered hydrophilic to promote wicking of moisture towards the hydrogel. The binder may be an abrasion resistant material. The binder comprises polyurethane, silicone, or acrylic.

In another aspect, a textile fabric includes a plurality of interconnected yarns and/or fibers together forming a fabric body. A plurality of responsive yarns and/or fibers are integrated into the fabric body in spaced relation to each other. The responsive yarns and/or fibers exhibit expansion or contraction in response to change in relative humidity or exposure to liquid sweat or a combination thereof, adjusting three dimensional geometry, insulation performance, air movement, and/or liquid management of the textile fabric in response to ambient conditions.

Preferred implementations may include one or more of the following additional features. The responsive yarns and/or fibers include hydrogel. The hydrogel comprises a polymeric hydrogel. The polymeric hydrogel is poly(vinyl methyl ether), or poly(N-isopropylacrylamide). The hydrogel is bound to the coated yarns and/or fibers with a binder. The hydrogel includes a plurality of gel particles disposed in a binder. The binder includes polyurethane, silicone, or acrylic. The binder is hydrophilic or rendered hydrophilic. The hydrogel includes acrylate or carboxymethyl cellulose. The hydrogel includes a hydrophilic polyurethane. The hydrogel has a volume phase transition critical temperature of between about 10°C and about 50°C (e.g., between about 30°C and about 40°C). The hydrogel includes a fast response gel. The expansion and/or contraction of the hydrogel is substantially reversible. The fabric body includes a knit construction having responsive yarns and/or fibers interlooped with other yarns and/or fibers. The other yarns and/or fibers are substantially free of the hydrogel. The fabric body includes at least two responsive yarns and/or fibers disposed in spaced apart relation along the fabric body and having one or more other yarns and/or fibers disposed therebetween. The responsive yarns and/or fibers are integrated into the fabric body in single course and/or multicourse in a band form. The fabric body has a knitted construction selected from the group consisting of single jersey, plated single jersey, double knit, three-end fleece, and terry loop. The knit fabric body includes at least a first course having one of the responsive yarns and/or fibers, a second course having another one of the responsive yarns and/or fibers, and the first and second courses are disposed in spaced apart relation along the fabric body with one or more courses of other yarns and/or fibers disposed therebetween. The other yarns and/or fibers are substantially free of the hydrogel. At least some of the responsive yarns and/or fibers include a coating of hydrogel carried by a yarn and/or fiber core. The coating of hydrogel forms a sheath disposed coaxially about the outer surface of the yarn and/or fiber core. At least some of the coated yarns and/or fibers include a coating of hydrogel which covers only a portion of an outer surface of a yarn and/or fiber core. The coating of hydrogel is disposed in side-by-side relation with the yarn and/or fiber core. The responsive yarns and/or fibers include co-extruded fibers having a fiber core co-extruded (e.g., in side-by-side or core-and-sheath relationship) with a hydrogel fiber. The hydrogel fiber is a fiber embedded with a hydrogel chemical, a fiber including a polymer exhibiting expansion or contraction in response to change in relative humidity or exposure to liquid sweat or a combination thereof, or a fiber including a co-polymer exhibiting expansion or contraction in response to change in relative humidity or exposure to liquid sweat or a combination thereof. The fabric body includes yarn with a plurality of synthetic fibers rendered hydrophilic. The textile fabric is in the form of an article of wearing apparel including one or more discrete regions having the responsive yarns and/or fibers. The one or more discrete regions correspond to regions of wearing apparel typically exposed to relatively high levels of moisture. The textile fabric includes spandex yarn for enhanced fit, comfort, and shape recovery. The textile fabric includes flame retardant yarns and/or fibers. The flame retardant yarns and/or fibers include synthetic fibers, natural fibers, or combinations thereof. The responsive yarns and/or fibers include flame retardant yarns and/or fibers.

The details of one or more embodiments of the invention are set forth in the accompanying drawings and the description below. Other features, objects, and advantages of the invention will be apparent from the description and drawings, and from the claims.

Any feature in one aspect of the invention may be applied to other aspects of the invention, in any appropriate combination. In particular, method aspects may be applied to apparatus aspects, and vice versa.

### DESCRIPTION OF DRAWINGS

Preferred features of the present invention will now be described, purely by way of example, with reference to the accompanying drawings, in which:
FIG. 1A is a plan view of a temperature and moisture responsive smart textile fabric.
FIG. 1B is cross-sectional view of the temperature and moisture responsive smart textile fabric of FIG 1A.
FIG. 2A is a front perspective view of a temperature and moisture responsive textile fabric garment.
FIGS. 2B and 2C are cross-sectional views of the temperature responsive textile fabric garment of FIG. 2A.
FIGS. 3A-D illustrate a temperature and moisture responsive textile fabric having non-continuous coatings of hydrogel bound to a smooth surface of the fabric.
FIG. 4A is a plan view of a temperature and moisture responsive smart textile fabric including individual, spaced apart yarns and/or fibers including hydrogel.
FIGS. 4B and 4C are embodiments of individual fibers which include hydrogel.
Like reference symbols in the various drawings indicate like elements.

### DETAILED DESCRIPTION

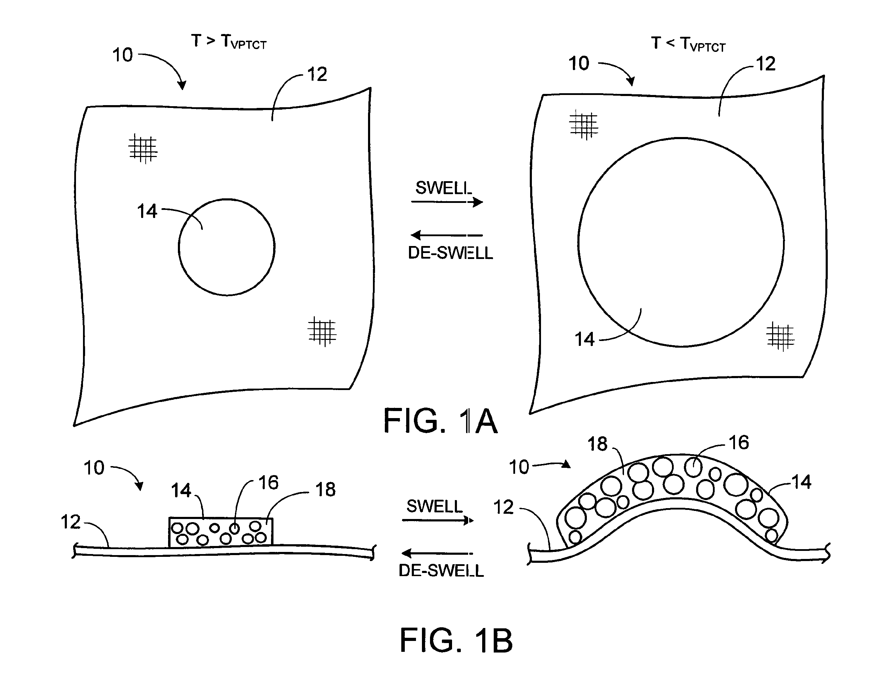

Referring to FIGS. 1A-1B, a temperature and moisture responsive smart textile fabric 10 has a smooth fabric surface 12 with one or more regions having a coating of hydrogel 14. The hydrogel 14 can be chemically bonded or physically bound, hereinafter referred to collectively as bound, to the smooth surface of the textile fabric. The textile fabric can include natural yarns and/or fibers (e.g., cotton, wool, silk, etc.), synthetic yarns and/or fibers (e.g., polyester, nylon, polypropylene, acrylic, etc.) or combinations of natural and synthetic yarns and/or fibers (e.g., plated construction including yarns formed of natural fibers and yarns formed of synthetic fibers, or blended yarns formed from natural and synthetic staple fibers). The textile fabric 10 can be circular knit (e.g., single jersey, plated jersey, double knit, three-end fleece, and/or terry sinker loop in plated or reverse plated construction), warp knit, or woven construction (as depicted in FIG. 1A). Preferred textile fabrics contain spandex (e.g., bare spandex, core-spun, wrap yarn, and/or air entangled, etc.) incorporated in the stitch yarn for enhanced fit, comfort, and shape recovery in garment applications. In some cases, the textile fabric 10 can include flame retardant yarns and/or fibers. Flame retardant yarns and/or fibers can include synthetic fibers (e.g., flame retardant nylon fibers), natural fibers (e.g., flame retardant cotton fibers), or combinations thereof (e.g., a flame retardant treated cotton/nylon blend). Referring to FIG. 1B, the hydrogel coating 14 may be in the form of gel particles 16, e.g., acrylates, carboxymethyl cellulose (CMC), hydrophilic polyurethane, e.g., cross-linked or non-cross-linked hydrophilic polyurethane, etc., disposed in a binder 18, e.g., a polymer and/or polymer foam matrix, and bound to the smooth surface 12 of the fabric. For example, the binder 18 can include polyurethane, silicone, acrylic, etc. Preferably, the binder 18 includes a hydrophilic material or a material that is rendered hydrophilic, thereby to promote wicking of moisture towards the hydrogel.

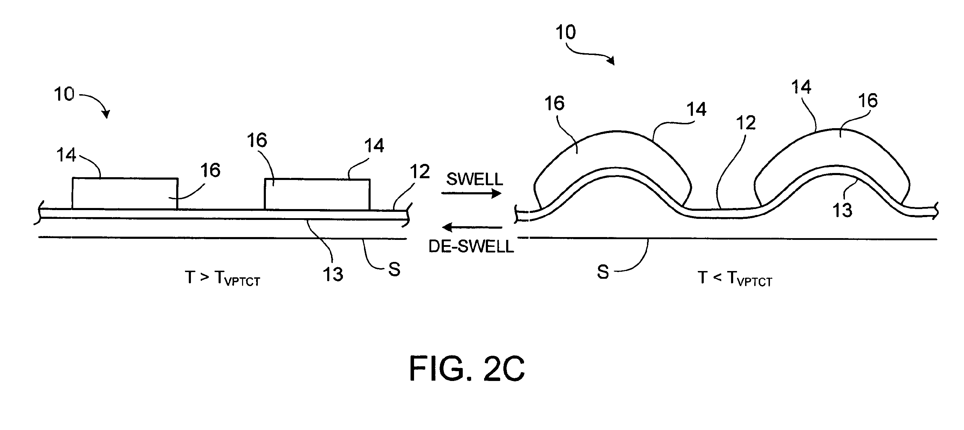

Alternatively, as illustrated in FIG. 2C, the hydrogel coating 14 can be in the form of a polymeric hydrogel, e.g., polyurethane (e.g., hydrophilic polyurethane, cross-linked polyurethane, non-cross-linked polyurethane, etc.) poly(vinyl methyl ether) or poly(N-isopropylacrylamide), deposited directly on the textile fabric 10 (i.e., without the need for a binder to bond to the smooth fabric surface 12 of the textile fabric 10).

As illustrated in FIGS. 1A and 1B, the hydrogel 14 exhibits a substantially reversible volumetric change in which the gel volume expands and/or contracts in response to ambient conditions. In this example, the polymer gel particles 16 are actuated by solvent exchange (e.g., moisture, water, and/or liquid sweat), accompanied by expansion ("swelling") or contraction ("de-swelling"), thereby altering the three dimensional configuration of the fabric 10.

Referring still to FIGS. 1A and B, the polymer gel 16 can be a single polymer network or an interpenetrating polymer network (IPN), containing two or more polymer chains. Preferred gels have a homogenous structure, which aids in attaining substantially symmetric deformation (i.e., expansion and/or contraction). A suitable gel 16 is selected based, at least in part, on its volume phase transition critical temperature or "VPTCT." The gel 16 absorbs moisture at temperatures below the VPTCT, causing expansion of the particles, and expels moisture at temperatures above the VPTCT, causing contraction of the particles. As illustrated in FIGS. 1A and 1B, when the fabric 10 is exposed to moisture in or at temperatures below the VPTCT, the gel particles 16 absorb the moisture and expand, changing the three dimensional geometry of the fabric 10. As the temperature is raised above the VPTCT, the gel particles begin to expel the absorbed moisture returning the fabric 10 toward its contracted three dimensional configuration.

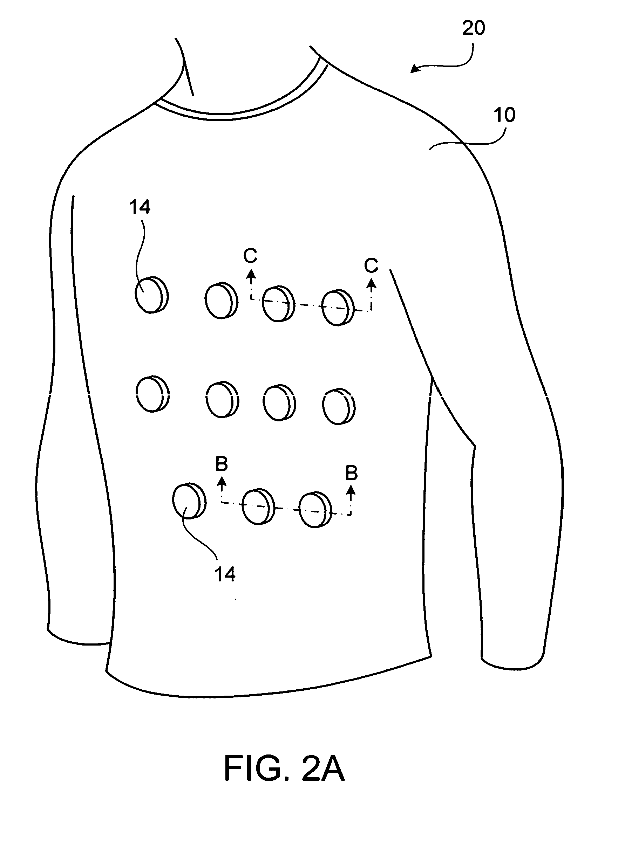

In the embodiment depicted in FIG. 2A, a temperature and moisture responsive textile fabric 10 is incorporated in a fabric garment 20. The garment 20 consists of a fabric formed as a woven or knit textile fabric, e.g. as a single jersey, plated jersey, double knit, three-end fleece, or terry sinker loop in plated or reverse plated construction, with or without spandex stretch yarn for enhanced three dimensional stretch and shape recovery. The textile fabric 10 will preferably still have other comfort properties, e.g. good water management, good stretch recovery, and/or kindness to the wearer's skin. The textile fabric can, for example, include synthetic fibers chemically treated to render the fibers hydrophilic, to promote wicking of moisture through the thermal fabric. Thus, liquid sweat will be drawn away from the inner surface of the textile fabric, near the user's skin, toward the outer surface (i.e., the smooth fabric surface). Moisture (e.g., liquid sweat) accumulating on the smooth outer surface will "wet" the hydrogel disposed thereat, thereby initiating changes in the three dimensional geometry of the fabric. The inner surface of the textile knit fabric, i.e. the surface opposite the wearer's skin, can be raised, e.g., raised terry loop, to reduce the touching points to the skin. Suitable materials include, for example, POWER DRY^{®} textile fabric, as manufactured by Malden Mills Industries, Inc.

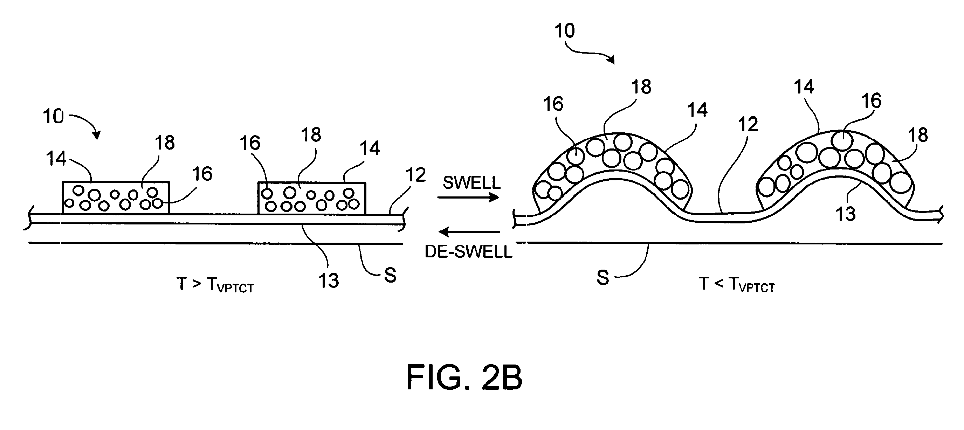

Referring to FIG. 2A, a plurality of discrete regions of hydrogel coating 14 are arranged on a smooth outer surface 12 of the garment 20. As described above, the coating may take the form of a plurality of gel particles 16 suspended in a binder 18 (e.g., polymer matrix), which is bound to the smooth outer surface of the garment (as shown in FIG. 2B), or the coating may take the form of a polymeric hydrogel deposited directly on the smooth outer surface of the garment without the use of an additional binder (as shown in FIG. 2C). A "fast response" gel having a VPTCT of between about 30°C and about 40°C is preferred. Fast response gel is defined as an "open cell" gel (i.e., a micro porous gel (containing pores in the size range 0.01 to about 10 microns), wherein some of the pores are interconnected) that reaches 90% of its maximum volumetric phase transition change in a time that is at least ten times faster than a comparable "closed cell" gel (i.e., a micro porous gel, wherein the pores are independent of each other) of the same geometry when both gels are subjected to similar change in environment conditions. Preferably, the gel particles 16 have a particle size in the range of between about 1 Tm and about 5,000 Tm, preferably between about 100 Tm to about 250 Tm, in a collapsed (i.e., contracted) state, and account for between about 5% and about 80% of the total dry weight of the hydrogel 14.

As illustrated in FIG. 2B, as the ambient temperature drops below the VPTCT, the hydrogel coating 14 begins to absorb moisture causing the hydrogel coating to expand, resulting in a change in the three dimensional configuration of the textile fabric. During use, for example, at temperatures below the VPTCT of the gel, the fabric 10 absorbs liquid moisture, e.g., sweat, which it then transports away from the user's skin S toward the smooth outer surface 12 where it is absorbed by the hydrogel 14. As a result, the hydrogel 14 expands, generating a gap "channeling effect" in the area between the user's skin S and an inner surface 13 of the fabric 10, allowing for increased air movement and accelerating the rate of evaporation of the liquid sweat from the skin S.

The expansion of the hydrogel coating 14 also reduces clinging of the wet textile fabric 10 (e.g., saturated with liquid sweat) to the skin, thereby reducing discomfort. In addition, the changes in three dimensional geometry due to expansion of the hydrogel coating 14 generate greater fabric bulk, and, thus, increased insulation. The three dimensional configuration improves tangential air flow between the user's skin and the textile fabric, thereby creating a heat dissipating or cooling effect, and further increasing the comfort level of the user.

In some embodiments, fabric 10 is hydrophilic or rendered hydrophilic to promote transport of moisture through the fabric. Thus, during use, liquid moisture, e.g., sweat, is transported through the fabric away from the wearer's skin and toward the hydrogel material 14 where it is absorbed and/or spread towards the surface for evaporation. This arrangement further helps to resist build up of moisture on the wearer's skin, and thus further increases the comfort level of the wearer.

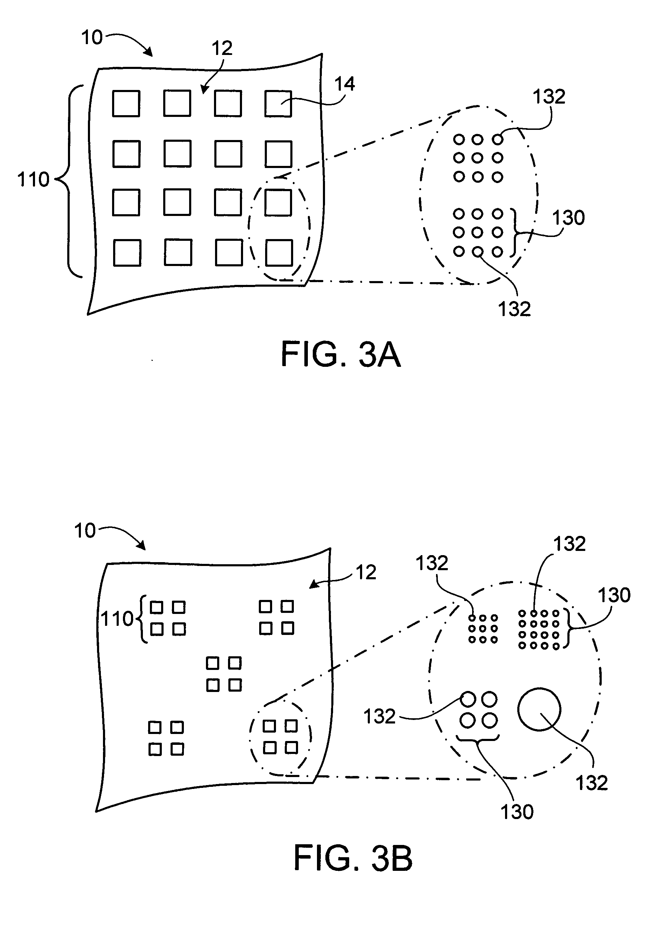

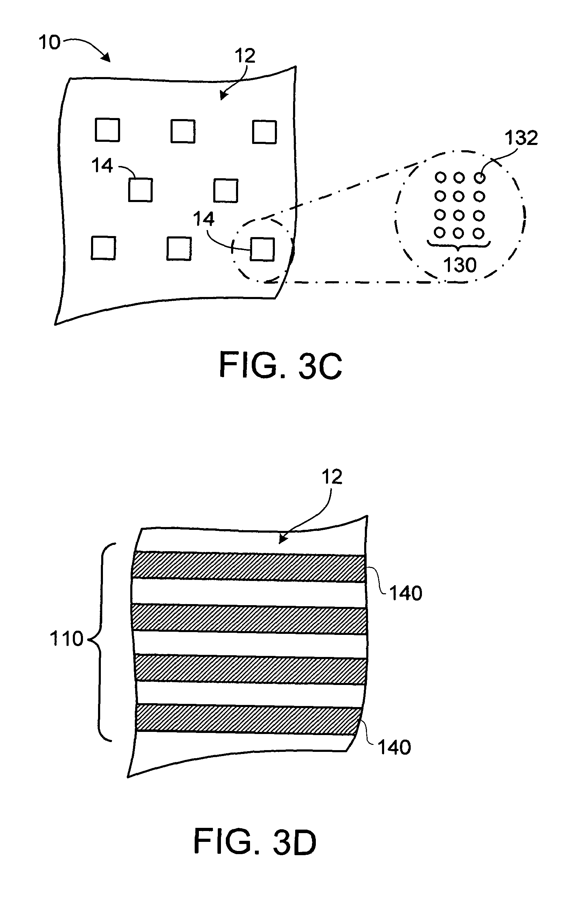

As illustrated in FIGS. 3A, 3B, 3C and 3D, the bound coating of hydrogel 14 may by applied as a non-continuous coating 110 and/or in a variety of different coating patterns that can be tailored to particular applications. For example, as shown in FIGS. 3A-3C, the non-continuous coating 110 includes clusters 130 of discrete coating segments 132, e.g., shown in the form discrete dots. The discrete coating segments 132 may be arranged in patterns of contrasting size and/or density. FIG. 3D illustrates an embodiment wherein the hydrogel 14 is applied in a pattern corresponding to a plurality of spaced apart bands 140.

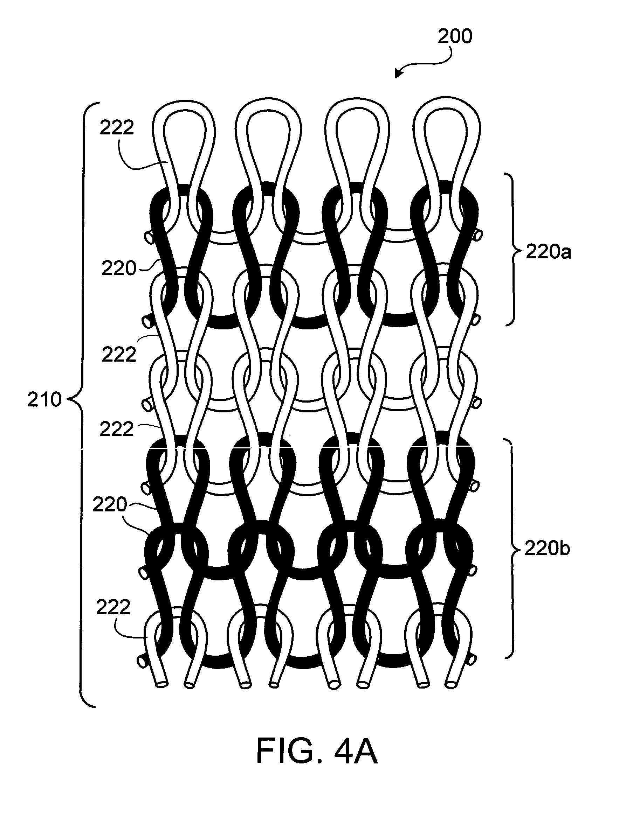

Referring to FIG. 4A, a temperature and moisture responsive smart textile fabric 200 has a fabric body 210 of knit construction which includes a plurality of interconnected yarns and/or fibers including a plurality of responsive yarns and/or fibers 220 interlooped with other yarns and/or fibers 222. The responsive yarns and/or fibers 220 each include hydrogel (such as any of those described above with regard to FIGS. 1A-2C) which exhibits expansion or contraction in response to change in relative humidity or exposure to liquid sweat or a combination thereof, adjusting insulation performance and/or liquid management of the textile fabric in response to ambient conditions. The other yarns and/or fibers 222 are substantially free of the hydrogel. As illustrated in FIG. 4A, the responsive yarns and/or fibers can be integrated into the fabric body 210 in spaced relation in one or more single courses 220a and/or multicourse 220b (i.e., two or more adjacent, interlooped courses) in band form. The yarns and/or fibers (i.e., the responsive yarns and/or fibers and/or the other yarns and/or fibers 220, 222) can include natural yarns and/or fibers (e.g., cotton, wool, silk, etc.), synthetic yarns and/or fibers (e.g., polyester, nylon, polypropylene, acrylic, etc.) or combinations of natural and synthetic yarns and/or fibers (e.g., plated construction including yarns formed of natural fibers and yarns formed of synthetic fibers, or blended yarns formed from natural and synthetic staple fibers). The textile fabric 200 can include spandex (e.g., incorporated in the stitch yarn) for enhanced fit, comfort, and shape recovery in garment applications. Alternatively and/or additionally, the textile fabric 200 can include flame retardant yarns and/or fibers (e.g., synthetic fibers, natural fibers, blends of natural and synthetic fibers). In some cases, the responsive and/or the other yarns and/or fibers can be rendered hydrophilic to promote wicking of moisture towards the hydrogel.

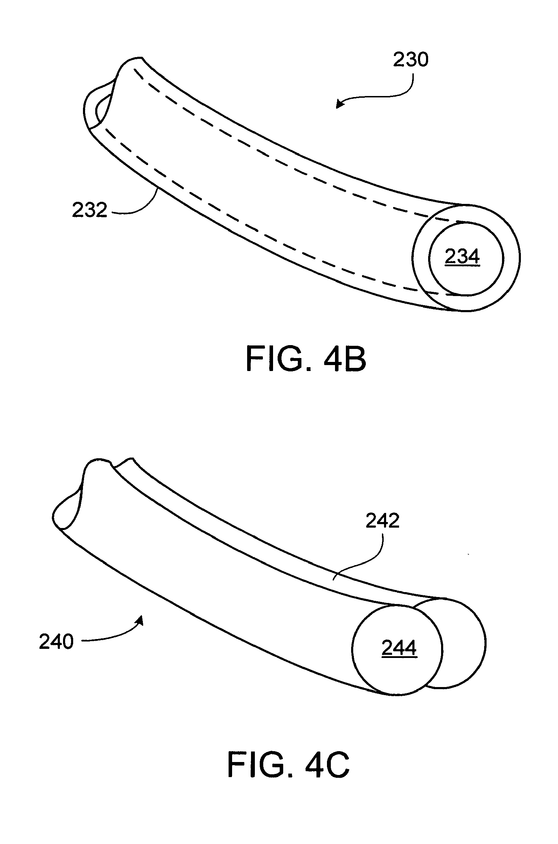

In some cases, at least some of the responsive yarns and/or fibers 220 include a hydrogel that substantially covers an outer surface of a yarn and/or fiber core. For example, FIG. 4B illustrates an embodiment of a responsive fiber 230 which includes hydrogel 232 that forms a sheath disposed coaxially about an outer surface of a fiber core 234. The hydrogel 232 can be applied as a coating on the surface of the fiber core 234. Alternatively or additionally, the hydrogel 232 can be co-extruded with the fiber core 234.

In some cases, at least some of the responsive yarns and/or fibers 220 can include hydrogel that covers only a portion of an outer surface of a yarns and/or fiber core. For example, FIG. 4C illustrates an embodiment of a responsive fiber 240 which includes a hydrogel 242 that is disposed in side-by-side relation with a fiber core 244. The hydrogel 242 can be, for example, a hydrogel fiber that is co-extruded with the fiber core 244. Suitable hydrogel fibers include, for example, fibers that are embedded with a hydrogel chemical and/or fibers formed of one or more polymers or co-polymers (such as those described above) that exhibit expansion or contraction in response to change in relative humidity or exposure to liquid sweat or a combination thereof.

A number of embodiments of the invention have been described. Nevertheless, it will be understood that various modifications may be made without departing from the spirit and scope of the invention. For example, the hydrogel can be applied on the textile fabric garment in a body mapping pattern. Reference is made to International Application No. PCT/US2005/0224, WO 2006/002371 A, filed June 23, 2005, the entire disclosure of which is incorporated herein by reference, including its teaching and description of an engineered thermal fabric article with regions of contrasting insulative capacity and performance, arranged by body mapping concepts. The hydrogel can be deposited on the textile fabric utilizing coating, laminating, and/or printing techniques, e.g., hot melt printing, gravure roll printing, and/or screen printing. Accordingly, other embodiments are within the scope of the following claims.

A broad aspect of the invention provides a textile fabric including one or more regions including a material which expands or contracts in response to a change in relative humidity and/or moisture.

In examples described, changes in ambient conditions results in the expansion or contraction of the material and thus can result in a change in one or more of the physical properties of the fabric. Preferably, the expansion or contraction of the material can result in an adjustment of, for example, the three dimensional geometry, insulation performance , air movement and/or liquid management in relation to the textile fabric. These changes to the fabric can occur for example in response to a change in the ambient conditions and/or presence of moisture, for example in the form of sweat of a user wearing an article made from the fabric.

The material may be bound to a surface of the textile fabric, which may comprise a smooth surface. Alternatively or in addition, the material may be in the form of responsive yarns or fibres in the fabric.

The material may respond to a change in relative humidity and/or exposure to liquid sweat and/or a combination thereof.

The material may comprise hydrogel.

A broad aspect of the invention provides a textile fabric including hydrogel. In preferred arrangements, the hydrogel is arranged to expand and/or contract in response to a change in relative humidity and/or presence of liquid sweat or a combination thereof. In examples described, the expansion and/or contraction of the hydrogel in the fabric leads to a change in one or more physical properties of the fabric, for example its three dimensional geometry, its insulation performance, air movement in the fabric, and/or liquid management of the fabric.

An aspect of the invention provides a textile fabric including a material adapted to expand and/or contract in response to a change in relative humidity and/or moisture, the material being arranged in the fabric such that expansion and/or contraction of the material results in a change in one or more properties of the fabric, for example three dimensional geometry, insulation performance, air movement and/or liquid management.

It will be understood that the present invention has been described above purely by way of example, and modification of detail can be made within the scope of the invention.

Each feature disclosed in the description, and (where appropriate) the claims and drawings may be provided independently or in any appropriate combination.

## Claims

1. A textile fabric having a smooth surface with one or more regions having a bound coating of hydrogel exhibiting expansion or contraction in response to change in relative humidity or exposure to liquid sweat or a combination thereof, adjusting insulation performance, air movement, and/or liquid management of the textile fabric in response to ambient conditions.

2. The textile fabric according to claim 1, wherein the coating of hydrogel comprises a polymeric hydrogel.

3. The textile fabric according to claim 2, wherein the polymeric hydrogel is selected from the group consisting of: poly(vinyl methyl ether), and poly(N-isopropylacrylamide).

4. The textile fabric as in any one of the preceding claims, wherein the hydrogel is bound to the smooth surface with a binder.

5. The textile fabric as in any one of claims 1-4, wherein the coating of hydrogel comprises a plurality of gel particles disposed in a binder.

6. The textile fabric according to claim 5, wherein the binder comprises polyurethane, silicone, or acrylic.

7. The textile fabric as in either one of claims 5 or 6, wherein the binder is hydrophilic or rendered hydrophilic.

8. The textile fabric according to claim 5, wherein the hydrogel comprises acrylate or carboxymethyl cellulose.

9. The textile fabric as in any one of the preceding claims, wherein the hydrogel comprises a hydrophilic polyurethane.

10. The textile fabric as in any one of the preceding claims, wherein the hydrogel has a volume phase transition critical temperature of between about 10°C and about 50°C.

11. The textile fabric as in any one of the preceding claims, wherein the hydrogel has a volume phase transition critical temperature of between about 30°C and about 40°C.

12. The textile fabric as in any one of the preceding claims, wherein the hydrogel comprises a fast response gel.

13. The textile fabric as in any one of the preceding claims, wherein the expansion and/or contraction of the hydrogel is substantially reversible.

14. The textile fabric as in any one of the preceding claims, wherein the textile fabric has a knitted construction selected from the group consisting of single jersey, plated single jersey, double knit, three-end fleece, and terry loop.

15. The textile fabric as in any one of the preceding claims, wherein the textile fabric has a plated single jersey or double knit construction configured to promote movement of moisture from a second surface of the fabric, opposite the smooth surface, toward the smooth surface.

16. The textile fabric as in any one of the preceding claims, wherein the textile fabric comprises yarn with a plurality of synthetic fibers rendered hydrophilic.

17. The textile fabric as in any one of the preceding claims, wherein the bound coating of hydrogel is a non-continuous coating comprising a plurality of discrete coating segments.

18. The textile fabric as in any one of the preceding claims in the form of an article of wearing apparel, wherein the one or more regions correspond to regions of wearing apparel typically exposed to relatively high levels of moisture.

19. The textile fabric as in claim 18, wherein the smooth surface of the fabric defines an outer surface of the article of wearing apparel.

20. The textile fabric as in any one of the preceding claims, wherein the ambient conditions include physical stimuli.

21. The textile fabric as in any one of the preceding claims, wherein the one or more regions of hydrogel are configured to adjust breathability and air movement of the textile fabric in response to ambient conditions.

22. The textile fabric as in any one of the preceding claims, further comprising flame retardant yarns and/or fibers.

23. A method of forming a temperature and moisture responsive textile fabric element for use in an engineered thermal fabric garment, the method comprising:
combining yarns and/or fibers to form a continuous web;
finishing the continuous web to form at least one smooth surface; and
depositing a coating of hydrogel on the smooth surface of the continuous web, the hydrogel exhibiting expansion or contraction in response to change in relative humidity or exposure to liquid sweat or a combination thereof, adjusting insulation performance, air movements, and/or liquid management of the textile fabric in response to ambient conditions.

24. The method according to claim 23, wherein the step of combining yarns and/or fibers in a continuous web comprises the further step of incorporating spandex fibers in the stitch yarn.

25. The method as in either of claim 23 or claim 24, wherein the hydrogel comprises a polymer gel having a single polymer network.

26. The method as in either of claim 23 or claim 24, wherein the hydrogel comprises a polymer gel having an interpenetrating polymer network.

27. The method as in any one of claims 23-26, wherein the step of depositing the coating of hydrogel comprises depositing the hydrogel by a process selected from the group consisting of: coating, lamination, and printing.

28. The method according to claim 27, wherein printing includes hot melt printing, gravure roll printing, hot melt gravure roll printing, or screen printing.

29. The method as in any one of claims 23-28, wherein the step of depositing the coating of hydrogel comprises depositing the hydrogel in a non-continuous pattern.

30. The method as in claim 29, wherein the non-continuous pattern is a grid pattern, a pattern comprising one or more bands, or combinations thereof.

31. A textile fabric comprising:
a plurality of interconnected yarns and/or fibers together forming a fabric body and including a plurality of responsive yarns and/or fibers integrated into the fabric body in spaced relation to each other, wherein the responsive yarns and/or fibers exhibit expansion or contraction in response to change in relative humidity or exposure to liquid sweat or a combination thereof, adjusting three dimensional geometry, insulation performance, air movement, and/or liquid management of the textile fabric in response to ambient conditions.

32. The textile fabric according to claim 31, wherein the responsive yarns and/or fibers comprise hydrogel.

33. The textile fabric according to claim 32, wherein the fabric body comprises a knit construction including responsive yarns and/or fibers interlooped with other yarns and/or fibers, wherein the other yarns and/or fibers are substantially free of the hydrogel.

34. The textile fabric according to claim 33, wherein the knit fabric body includes at least a first course comprising one of the responsive yarns and/or fibers, a second course comprising another one of the responsive yarns and/or fibers, wherein the first and second courses are disposed in spaced apart relation along the fabric body with one or more courses of other yarns and/or fibers disposed therebetween, wherein the other yarns and/or fibers are substantially free of the hydrogel.

35. The textile fabric as is in either one of claims 33 or 34, wherein the responsive yarns and/or fibers are integrated into the fabric body in single course and/or multicourse in a band form.

36. The textile fabric as in any one of claims 32-35, wherein the fabric body comprises at least two responsive yarns and/or fibers disposed in spaced apart relation along the fabric body and including one or more other yarns and/or fibers disposed therebetween, wherein the other yarns and/or fibers are substantially free of the hydrogel.

37. The textile fabric as in any one of claims 32-36, wherein the fabric body has a knitted construction selected from the group consisting of single jersey, plated single jersey, double knit, three-end fleece, terry loop knit in regular plating, and terry loop knit in reverse plating.

38. The textile fabric as in any one of claims 31-37, wherein at least some of the responsive yarns and/or fibers include a coating of hydrogel carried by a yarn and/or fiber core.

39. The textile fabric according to either of claims 31-37, wherein the responsive yarns and/or fibers include co-extruded fibers comprising a fiber core co-extruded with a hydrogel fiber.

40. The textile fabric according to claim 39, wherein the fiber core and the hydrogel fiber are co-extruded in side-by-side relationship.

41. The textile fabric according to claim 39, wherein the fiber core and the hydrogel fiber are co-extruded in a core-and-sheath relationship.

42. The textile fabric as in any one of claims 39-41, wherein the hydrogel fiber is selected from the group consisting of: a fiber embedded with a hydrogel chemical, a fiber comprising a polymer exhibiting expansion or contraction in response to change in relative humidity or exposure to liquid sweat or a combination thereof, and a fiber comprising a co-polymer exhibiting expansion or contraction in response to change in relative humidity or exposure to liquid sweat or a combination thereof.

43. A textile fabric including a material adapted to expand and/or contract in response to a change in relative humidity and/or exposure to liquid sweat, the material being arranged in the fabric such that expansion and/or contraction of the material results in a change in one or more properties of the fabric, for example three dimensional geometry, insulation performance, air movement and/or liquid management.
